# NEUE EUROPÄISCHE PATENTSCHRIFT

(11) **EP 3 759 379 B2**
(45) Veröffentlichungstag und Bekanntmachung des Hinweises auf die Entscheidung über den Einspruch: **30.04.2025**
(45) Hinweis auf die Patenterteilung: 09.03.2022
(21) Anmeldenummer: 19701431.9
(22) Anmeldetag: 11.01.2019
(51) Int. Cl.: F16J 15/06, F16J 15/3284

(54) **ELEKTRISCH LEITFÄHIGE DICHTUNGSANORDNUNG UND ANORDNUNG MIT ZWEI GEGENEINANDER ABGEDICHTETEN MASCHINENELEMENTEN**
ELECTRICALLY CONDUCTIVE SEALING ASSEMBLY, AND ASSEMBLY HAVING TWO MACHINE ELEMENTS SEALED OFF WITH RESPECT TO ONE ANOTHER
ENSEMBLE D'ÉTANCHÉITÉ ÉLECTRIQUEMENT CONDUCTEUR ET ENSEMBLE COMPRENANT DEUX ÉLÉMENTS DE MACHINE ÉTANCHÉIFIÉS L'UN PAR RAPPORT À L'AUTRE

(30) Priorität: 02.03.2018 DE 102018104754
(43) Veröffentlichungstag der Anmeldung: 06.01.2021
(73) Patentinhaber: Schaeffler Technologies AG & Co. KG, 91074 Herzogenaurach (DE)
(72) Erfinder: STÖHR, Thomas, 91315 Höchstadt (DE); MILDENBERGER, Holger, 97218 Gerbrunn (DE)
(86) Internationale Anmeldenummer: PCT/DE2019/100019
(87) Internationale Veröffentlichungsnummer: WO 2019/166043

(56) Entgegenhaltungen:
- EP-A1- 3 048 340
- EP-A1- 3 048 340
- DE-A1- 102015 224 042
- DE-A1- 102017 107 326
- JP-A- 2009 079 643

## Beschreibung

Elektrisch leitfähige Dichtungsanordnung und Anordnung mit zwei gegeneinander abgedichteten Maschinenelementen

### Gebiet der Erfindung

Die vorliegende Erfindung betrifft eine Dichtungsanordnung zur Abdichtung eines Raumes zwischen einem ersten Maschinenelement und einem in Bezug zu dem ersten Maschinenelement beweglichen zweiten Maschinenelement, wobei erstes und zweites Maschinenelement konzentrisch zueinander angeordnet sind. Die Dichtungsanordnung umfasst eine Dichtung mit einem an dem ersten Maschinenelement festlegbaren Dichtungssitz und einer Dichtlippe mit einer Dichtkante, welche im eingebauten Zustand der Dichtung an dem zweiten Maschinenelement anliegt. Die Erfindung betrifft weiterhin eine Anordnung mit zwei gegeneinander abgedichteten Maschinenelementen.

### Hintergrund der Erfindung

Durch die schnelle Rotation von beispielsweise in Asynchronmaschinen eingebauten Wälzlagern werden Spannungen induziert. Bei der Ableitung der Spannungen über die Lagerringe und die Wälzkörper kann es in den Lagerlaufbahnen zur Riefenbildung kommen. Zum Abbau von induzierten Spannungen kommen Lagerschutzringe, wie zum Beispiel der unter der Bezeichnung AEGIS Bearing Protection Ring^{™} vertriebene Lagerschutzring, zum Einsatz. Lagerschutzringe werden vor das Wälzlager geschraubt und leiten die Spannungen mittels am Umfang verteilt angeordneter Kohlefaserbürsten ab. Nachteilig an dieser Lösung ist, dass die Kohlefaserbürsten während des Betriebs verschmutzen können, was zu einer Einschränkung der elektrischen Leitfähigkeit führen kann. Außerdem haben die radial aufliegenden Kohlefaserbürsten keine aktive nachstellende Funktion, um Verschleiß zu kompensieren.

Weiterhin existieren elektrisch leitfähige Vliese, welche an Radialwellendichtringen angebracht werden können und einen Stromdurchgang durch ein Wälzlager ermöglichen. Für die elektrisch leitenden Vliese wird jedoch zusätzlicher axialer Bauraum benötigt. Die elektrisch leitende Komponente kann bei dieser Lösung nur begrenzt nachgestellt werden. Eine derartige Lösung ist in der DE 10 2013 000 982 B4 und der DE 10 2014 010 269 A1 beschrieben.

Die DE 10 2013 000 982 B4 zeigt einen Dichtring mit mindestens einer dynamisch beanspruchten Dichtlippe und einer Vorschaltdichtung, die mit axialem Abstand benachbart zur Dichtlippe angeordnet ist. Die Vorschaltdichtung besteht aus einem elektrisch leitfähigen Vliesstoff, um eine elektrisch leitfähige Verbindung und damit einen Potentialausgleich zwischen gegeneinander abzudichtenden Maschinenelementen herzustellen. Die gegeneinander abzudichtenden Maschinenelemente werden von der Vorschaltdichtung jeweils anliegend berührt.

Die DE 10 2014 010 269 A1 befasst sich mit einer Vorschaltdichtung umfassend eine kreisringförmig ausgebildete Scheibe aus einem elektrisch leitfähigen und luftdurchlässigen Werkstoff und einem Tragkörper. Die Scheibe ist bezogen auf den Tragkörper als separat erzeugtes Einzelteil ausgebildet und mit dem Tragkörper verbunden. Als Werkstoff für die Scheibe wird vorzugsweise ein Vliesstoff verwendet.

In der DE 10 2016 010 926 A1 ist ein Wellenerdungsring zur Ableitung induzierter Spannungen von einem ersten Maschinenelement in ein zweites Maschinenelement beschrieben. Der Wellenerdungsring umfasst ein ringförmiges Gehäuse aus elektrisch leitendem Material, das mit dem einen Maschinenelement leitend verbunden ist. Das Gehäuse ist mit einem Ableitelement aus einem elektrisch leitenden Material elektrisch leitend verbunden, welches mit dem anderen Maschinenelement in elektrisch leitender Verbindung steht. Das Ableitelement ist als ein sich zumindest über einen Teil des Umfangs des Wellenerdungsrings erstreckender scheibenförmiger Ableitkörper ausgebildet.

DE 10 2015 224042 A1 offenbart eine Dichtungsanordnung gemäß dem Oberbegriff des Anspruchs 1.

### Aufgabe der Erfindung

Die Aufgabe der vorliegenden Erfindung besteht somit darin, eine elektrisch leitfähige Dichtungsanordnung für gegeneinander abzudichtende Maschinenelemente bereitzustellen, welche keinen zusätzlichen Bauraum erfordert und keiner Funktionsbeeinträchtigung durch Verschmutzungen unterliegt. Die Dichtungsanordnung soll wartungsfrei sein, d. h. während der gesamten Betriebsdauer der Dichtungsanordnung soll die stromleitende Funktion erhalten bleiben. Weiterhin soll eine Anordnung mit zwei gegeneinander abgedichteten Maschinenelementen zur Verfügung gestellt werden.

### Beschreibung der Erfindung

Zur Lösung der erfindungsgemäßen Aufgabe dienen eine Dichtungsanordnung gemäß dem beigefügten Anspruch 1 sowie eine Anordnung gemäß dem beigefügten Anspruch 6.

Die erfindungsgemäße Dichtungsanordnung dient zur Abdichtung eines Raumes zwischen einem ersten Maschinenelement und einem in Bezug zu dem ersten Maschinenelement beweglichen zweiten Maschinenelement. Erstes und zweites Maschinenelement sind konzentrisch zueinander angeordnet. Die Dichtungsanordnung umfasst zunächst eine Dichtung mit einem an dem ersten Maschinenelement festlegbaren Dichtungssitz und einer Dichtlippe mit einer Dichtkante, welche im eingebauten Zustand der Dichtung an dem zweiten Maschinenelement anliegt. Erfindungswesentlich ist, dass die Dichtungsanordnung weiterhin ein Leitelement umfasst, welches sich zur Herstellung einer elektrisch leitfähigen Verbindung zwischen dem ersten und dem zweiten Maschinenelement von dem ersten Maschinenelement bis zu dem zweiten Maschinenelement erstreckt. Das Leitelement ist zumindest abschnittsweise mit der dem abzudichtenden Raum abgewandten Seite der Dichtung mechanisch verbunden. Es besteht aus einem in eine Elastomermatrix eingebetteten elektrisch leitfähigen Fasergewebe. Bei der Fertigung wird das Fasergewebe vorzugsweise in das formgebende Werkzeug eingelegt und während des Herstellungsprozesses an die Dichtung angebunden.

Ein wesentlicher Vorteil der erfindungsgemäßen Dichtungsanordnung besteht darin, dass sie Stromleitungsfunktion und Dichtungsfunktion in einer kompakten Baueinheit miteinander kombiniert. Mittels des Leitelements kann auf einfache Art und Weise ein Stromleitpfad zwischen zwei Maschinenelementen geschaffen werden. Die strom leitende Funktion bleibt während der gesamten Betriebsdauer der Dichtung erhalten, da sich das elektrisch leitfähige Fasergewebe von dem ersten Maschinenelement bis zu dem zweiten Maschinenelement erstreckt und daher stets ein Kontakt zwischen dem elektrisch leitfähigen Fasergewebe und den abzudichtenden Maschinenelementen gewährleistet. Bei auftretendem Verschleiß erfolgt hierdurch ein automatisches "Nachstellen" des elektrisch leitfähigen Fasergewebes. Eine beispielsweise in ein Wälzlager eingebaute erfindungsgemäße Dichtungsanordnung verhindert somit Schäden an der Wälzkörperlaufbahn, die durch Funkenbildung auftreten können. Die Dichtung dichtet zum einen den Raum vor Umwelteinflüssen ab und sorgt zum anderen dafür, dass Schmierstoff und Schmutzpartikel aus dem Raum in den Kontaktbereich zwischen den Maschinenelementen und dem Leitelement kommt. Somit wird einer die Stromleitung vermindernden Verschmutzung vorgebeugt. Auf zusätzliche staub- und ölabweisende Bauteile, wie beispielsweise Fleece-Scheiben, kann verzichtet werden. Auf diese Weise können Kosten eingespart werden. Außerdem verringert sich erfindungsgemäß das Reibmoment im Vergleich zu Lösungen, welche Schutzscheiben aus Filz oder Fleece oder ähnliche Bauteile als Verschmutzungsschutz erfordern. Die Trennung von Leit- und Dichtfunktion hat weiterhin den Vorteil, dass Verschleißpartikel des Fasergewebes nicht in den abzudichtenden Raum gelangen können. Die Dichtungsanordnung ist praktisch wartungsfrei. Die bisherigen Dichtungsgeometrien können beibehalten werden. Die Ausstattung von Dichtungen mit elektrischer Leitfähigkeitsfunktion erfolgt erfindungsgemäß bauraumneutral.

Als elektrisch leitfähige Fasern eignen sich Kohlefasern, Derivate von Kohlefasern, metallische Fasern oder gefüllte Polymerfaser. Es soll keine Einschränkung auf die genannten Fasern erfolgen, andere Fasern mit einer guten elektrischen Leitfähigkeit sind ebenso möglich.

Das Leitelement erstreckt sich im nicht eingebauten Zustand der Dichtungsanordnung vorzugsweise über die Dichtung hinaus. Bei der Montage legt sich das Leitelement an die Maschinenelemente an. Durch die Überdeckung des leitfähigen Fasergewebes des Leitelementes mit den Maschinenelementen ist ein dauerhafter elektrischer Kontakt sichergestellt, was eine lange Lebensdauer gewährleistet.

Das Leitelement ist mit der Dichtung stoffschlüssig verbunden, wobei das Leitelement an die Dichtung aufvulkanisiert ist.

Eine bevorzugte Ausführungsform nutzt eine als Dichtungsring ausgebildete Dichtung und ein als Leitring ausgebildetes Leitelement.

Als zweckmäßig hat es sich erwiesen, die Dichtung mit einer Armierung auszustatten, an welcher ein die Dichtlippe umfassender Elastomerkörper stoffschlüssig befestigt ist. Durch die Armierung kann eine Verformung der Dichtung durch im Betrieb auftretende Kräfte wirksam vermieden werden. Die Armierung besteht vorzugsweise aus Blech.

Die erfindungsgemäße Anordnung umfasst ein erstes Maschinenelement und ein in Bezug zu dem ersten Maschinenelement drehbares zweites Maschinenelement, wobei erstes und zweites Maschinenelement konzentrisch zueinander angeordnet sind, sowie die oben beschriebene Dichtungsanordnung zur Abdichtung eines Raumes zwischen dem ersten und dem zweiten Maschinenelement. Die erfindungsgemäße Anordnung umfasst bevorzugt eine der beschriebenen bevorzugten Ausführungsformen der Dichtungsanordnung.

Gemäß einer bevorzugten Ausführungsform sind das erste und das zweite Maschinenelement Lagerringe eines Wälzlagers. Der abzudichtende Raum ist in diesem Fall ein zur Aufnahme von Wälzkörpern dienender Wälzkörperraum. Mittels Dichtungsanordnung erfolgt eine Abdichtung des Wälzkörperraumes. Gleichzeitig ermöglicht die Dichtungsanordnung den Stromdurchgang zwischen den Lagerringen.

Bei alternativen Anwendungen kann das erste Maschinenelement beispielsweise eine Welle und das zweite Maschinenelement ein Gehäuse sein. Die Dichtungsanordnung dient hierbei zur Abdichtung eines Raumes zwischen der Welle und dem Gehäuse und gewährleistet außerdem den Stromdurchgang zwischen dem Gehäuse und der Welle und sorgt ggf. für eine Erdung (Potentialausgleich) der Anordnung.

### Kurze Beschreibung der Zeichnungen

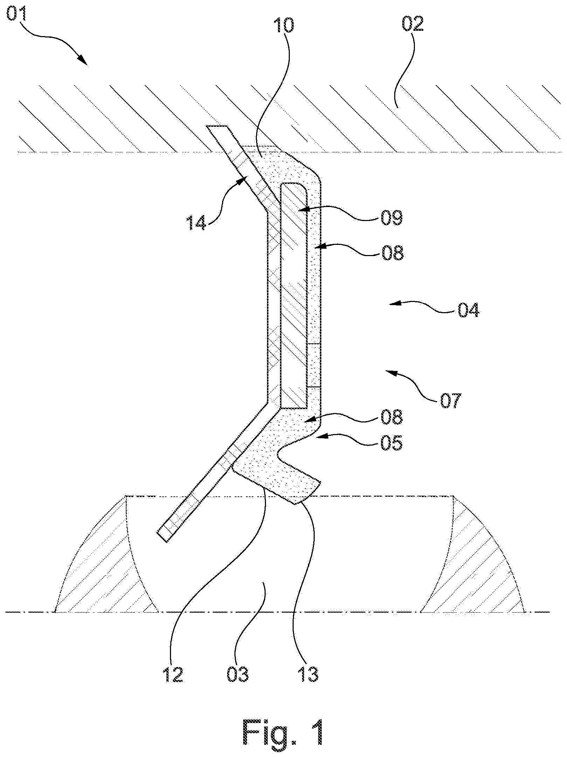

Eine bevorzugte Ausführungsform der erfindungsgemäßen Anordnung wird nachfolgend anhand der beigefügten einzigen Figur näher erläutert, welche eine Schnittansicht der erfindungsgemäßen Anordnung zeigt.

### Ausführliche Beschreibung der Zeichnungen

Die erfindungsgemäße Anordnung 01 umfasst ein erstes Maschinenelement 02 und ein in Bezug zu dem ersten Maschinenelement 02 drehbares zweites Maschinenelement 03. Erstes und zweites Maschinenelement 02, 03 sind konzentrisch zueinander angeordnet und können beispielsweise als Lagerringe eines Wälzlagers oder als ein Gehäuse und eine Welle ausgebildet sein.

Ein weiterer Bestandteil der Anordnung 01 ist eine Dichtungsanordnung 04. Die Dichtungsanordnung 04 beinhaltet eine Dichtung 05, welche in der gezeigten Ausführung als Dichtungsring ausgebildet ist. Die Dichtung 05 dient als rotatorische Dichtung zum Abdichten eines Raumes 07 zwischen dem ersten und dem zweiten Maschinenelement 02, 03. Sie besteht aus einem Elastomerkörper 08, welcher mit einer Armierung 09 verbunden ist. Der Elastomerkörper 08 besitzt einen Dichtungssitz 10, mit welchem er an dem ersten Maschinenelement 02 festgelegt ist, und eine Dichtlippe 12 mit einer Dichtkante 13, welche an dem zweiten Maschinenelement 03 anliegt. Es sind natürlich ebenso Ausführungen mit mehreren Dichtlippen 12 möglich.

Die Dichtungsanordnung 04 umfasst weiterhin ein ringförmig ausgebildetes Leitelement 14, welches sich zur Herstellung einer elektrisch leitfähigen Verbindung zwischen dem ersten und dem zweiten Maschinenelement 02, 03 von dem ersten Maschinenelement 02 bis zu dem zweiten Maschinenelement 03 erstreckt. Das Leitelement 14 ist zumindest abschnittsweise mit der dem abzudichtenden Raum 07 abgewandten Seite der Dichtung 05 mechanisch verbunden. Die stoffschlüssige Verbindung ist mittels Anvulkanisieren des Leitelementes 14 realisiert. Das Leitelement 14 besteht aus einem in eine Elastomermatrix eingebetteten elektrisch leitfähigen Fasergewebe. Das elektrisch leitfähige Fasergewebe kann beispielsweise aus Kohlefasern, Derivaten von Kohlefasern, metallischen Fasern oder gefüllten Polymerfasern gefertigt sein. Das Leitelement 14 erstreckt sich in radialer Richtung über die Dichtung 05 hinaus. Bei der Montage legt sich das flexible Leitelement 14 daher an die Maschinenelemente 02, 03 an, wodurch ein dauerhafter elektrischer Kontakt zwischen dem Leitelement 14 und den Maschinenelementen 02, 03 hergestellt wird. Durch das Leitelement 14 wird ein Stromleitpfad zwischen beiden Maschinenelementen 02, 03 geschaffen. Die Querschnitte der elektrisch leitfähigen Fasern des Fasergewebes an den Kontaktstellen des Leitelementes 14 mit den Maschinenelementen 02, 03 stellen den elektrischen Kontakt zwischen den Maschinenelementen 02, 03 und dem Leitelement 14 her.

### Bezugszeichenliste

- 01: Anordnung
- 02: erstes Maschinenelement
- 03: zweites Maschinenelement
- 04: Dichtungsanordnung
- 05: Dichtung
- 06: -
- 07: Raum
- 08: Elastomerkörper
- 09: Armierung
- 10: Dichtungssitz
- 11: -
- 12: Dichtlippe
- 13: Dichtkante
- 14: Leitelement

## Patentansprüche

1. Dichtungsanordnung (04) zur Abdichtung eines Raumes (07) zwischen einem ersten Maschinenelement (02) und einem in Bezug zu dem ersten Maschinenelement (02) beweglichen zweiten Maschinenelement (03), wobei erstes und zweites Maschinenelement (02, 03) konzentrisch zueinander angeordnet sind, umfassend eine Dichtung (05) mit einem an dem ersten Maschinenelement (02) festlegbaren Dichtungssitz (10) und einer Dichtlippe (12) mit einer Dichtkante (13), welche im eingebauten Zustand der Dichtung (05) an dem zweiten Maschinenelement (03) anliegt, wobei die Dichtungsanordnung (04) weiterhin ein Leitelement (14) umfasst, welches sich zur Herstellung einer elektrisch leitfähigen Verbindung zwischen dem ersten und dem zweiten Maschinenelement (02, 03) von dem ersten Maschinenelement (02) bis zu dem zweiten Maschinenelement (03) erstreckt, **dadurch gekennzeichnet, dass** das Leitelement (14) zumindest abschnittsweise mit der dem abzudichtenden Raum (07) abgewandten Seite der Dichtung (05) mechanisch verbundenen ist, und wobei das Leitelement (14) aus einem in eine Elastomermatrix eingebetteten elektrisch leitfähigen Fasergewebe besteht, wobei dass das Leitelement (14) mit der Dichtung (05) stoffschlüssig verbunden ist, wobei das Leitelement (14) an der Dichtung (05) anvulkanisiert ist.

2. Dichtungsanordnung (04) nach Anspruch 1, **dadurch gekennzeichnet, dass** das elektrisch leitfähige Fasergewebe aus Kohlefasern, Derivaten von Kohlefasern, metallischen Fasern oder gefüllten Polymerfasern besteht.

3. Dichtungsanordnung (04) nach Anspruch 1 oder 2, **dadurch gekennzeichnet, dass** sich das Leitelement (14) im nicht eingebauten Zustand der Dichtungsanordnung (04) über die Dichtung (05) hinaus erstreckt.

4. Dichtungsanordnung (04) nach einem der Ansprüche 1 bis 3, **dadurch gekennzeichnet, dass** die Dichtung (05) als Dichtungsring und das Leitelement (14) als Leitring ausgebildet sind.

5. Dichtungsanordnung (04) nach einem der Ansprüche 1 bis 4, **dadurch gekennzeichnet, dass** die Dichtung (05) eine Armierung (09) aufweist, an welcher ein die Dichtlippe (12) umfassender Elastomerkörper (08) befestigt ist.

6. Anordnung (01) umfassend ein erstes Maschinenelement (02) und ein in Bezug zu dem ersten Maschinenelement (02) drehbares zweites Maschinenelement (03), wobei erstes und zweites Maschinenelement (02, 03) konzentrisch zueinander angeordnet sind, sowie weiter umfassend eine Dichtungsanordnung (04) zur Abdichtung eines Raumes (07) zwischen dem ersten und dem zweiten Maschinenelement (02, 03) gemäß einem der Ansprüche 1 bis 5.

7. Anordnung (01) nach Anspruch 6, **dadurch gekennzeichnet, dass** das erste und das zweite Maschinenelement (02, 03) Lagerringe eines Wälzlagers sind, und dass der abzudichtende Raum (07) ein zur Aufnahme von Wälzkörpern dienender Wälzkörperraum ist.

8. Anordnung (01) nach Anspruch 6, **dadurch gekennzeichnet, dass** das erste Maschinenelement (02) eine Welle und das zweite Maschinenelement (03) ein Gehäuse ist.

## Claims

1. A sealing assembly (04) for sealing off a space (07) between a first machine element (02) and a second machine element (03) that is movable in relation to the first machine element (02), wherein the first and second machine element (02, 03) are arranged concentrically with respect to one another, comprising a seal (05) with a seal seat (10) that can be fixed on the first machine element (02) and with a sealing lip (12) having a sealing edge (13) that bears against the second machine element (03) when the seal (05) is in the installed state, wherein the sealing element (04) further comprises a conductive element (14) that, in order to produce an electrically conductive connection between the first and second machine element (02, 03), extends from the first machine element (02) to the second machine element (03), **characterised in that** the conductive element (14) is mechanically connected at least in sections to the side of the seal (05) facing away from the space (07) to be sealed off, and wherein the conductive element (14) consists of an electrically conductive fibrous fabric embedded in an elastomer matrix, wherein the conductive element (14) is connected to the seal (05) in a materially bonded manner, wherein the conductive element (14) is vulcanised to the seal (05).

2. The sealing assembly (04) according to claim 1, **characterised in that** the electrically conductive fibrous fabric consists of carbon fibres, derivatives of carbon fibres, metallic fibres or filled polymer fibres.

3. The sealing assembly (04) according to claim 1 or 2, **characterised in that** the conductive element (14) extends over the seal (05) in the non-installed state of the sealing assembly (04).

4. The sealing assembly (04) according to any one of claims 1 to 3, **characterised in that** the seal (05) is designed as a sealing ring and the conductive element (14) is designed as a conductive ring.

5. The sealing assembly (04) according to any one of claims 1 to 4, **characterised in that** the seal (05) has a reinforcement (09) to which an elastomer body (08) comprising the sealing lip (12) is attached.

6. An assembly (01) comprising a first machine element (02) and a second element (03) that is rotatable in relation to the first machine element (02), wherein the first and second machine element (02, 03) are arranged concentrically with respect to one another, and further comprising a sealing assembly (04) for sealing off a space (07) between the first and the second machine element (02, 03) according to any one of claims 1 to 5.

7. The assembly (01) according to claim 6, **characterised in that** the first and the second machine element (02, 03) are bearing rings of a rolling bearing, and **in that** the space (07) to be sealed off is a rolling body space used to accommodate rolling bodies.

8. The assembly (01) according to claim 6, **characterised in that** the first machine element (02) is a shaft and the second machine element (03) is a housing.

## Revendications

1. Ensemble d'étanchéité (04) destiné à étanchéifier un espace (07) entre un premier élément de machine (02) et un second élément de machine (03) mobile par rapport au premier élément de machine (02), les premier et second éléments de machine (02, 03) étant disposés de manière concentrique l'un par rapport à l'autre, comportant un joint d'étanchéité (05) comprenant un siège (10) de joint d'étanchéité pouvant être fixé sur le premier élément de machine (02) et une lèvre étanche (12) pourvue d'une arête étanche (13), qui, lorsque le joint d'étanchéité (05) est à l'état monté, vient reposer sur le second élément de machine (03), l'ensemble d'étanchéité (04) comprenant en outre un élément conducteur (14) qui s'étend du premier élément de machine (02) au second élément de machine (03) pour établir une connexion électriquement conductrice entre les premier et second éléments de machine (02, 03), **caractérisé en ce que** l'élément conducteur (14) est raccordé mécaniquement, au moins par segments, au côté du joint d'étanchéité (05) opposé à l'espace (07) à étanchéifier et l'élément conducteur (14) étant constitué d'un tissu fibreux électriquement conducteur incorporé dans une matrice élastomère, l'élément conducteur (14) étant raccordé au joint d'étanchéité (05) par liaison de matière, l'élément conducteur (14) étant vulcanisé sur le joint d'étanchéité (05).

2. Ensemble d'étanchéité (04) selon la revendication 1, **caractérisé en ce que** le tissu fibreux électriquement conducteur est constitué de fibres de carbone, de dérivés de fibres de carbone, de fibres métalliques ou de fibres polymères pleines.

3. Ensemble d'étanchéité (04) selon la revendication 1 ou 2, **caractérisé en ce que** l'élément conducteur (14) s'étend au-delà du joint d'étanchéité (05) lorsque l'ensemble d'étanchéité (04) est dans l'état non monté.

4. Ensemble d'étanchéité (04) selon l'une quelconque des revendications 1 à 3, **caractérisé en ce que** le joint d'étanchéité (05) est formé comme une bague d'étanchéité et l'élément conducteur (14) comme un anneau conducteur.

5. Ensemble d'étanchéité (04) selon l'une quelconque des revendications 1 à 4, **caractérisé en ce que** le joint d'étanchéité (05) présente une armature (09) sur laquelle est fixé un corps élastomère (08) comprenant la lèvre d'étanchéité (12).

6. Ensemble (01) comprenant un premier élément de machine (02) et un second élément de machine (03) pouvant tourner par rapport au premier élément de machine (02), les premier et second éléments de machine (02, 03) étant disposés de manière concentrique l'un par rapport à l'autre et comprenant en outre un ensemble d'étanchéité (04) pour étanchéifier un espace (07) entre le premier et le second élément de machine (02, 03) selon l'une quelconque des revendications 1 à 5.

7. Ensemble (01) selon la revendication 6, **caractérisé en ce que** le premier et le second élément de machine (02, 03) sont des bagues de roulement d'un palier à roulement et **en ce que** l'espace (07) à étanchéifier est un espace pour corps de roulement servant à loger les corps de roulement.

8. Ensemble (01) selon la revendication 6, **caractérisé en ce que** le premier élément de machine (02) est un arbre et le second élément de machine (03) est un boîtier.
